# EUROPÄISCHE PATENTANMELDUNG

(11) **EP 4 095 045 A1**
(43) Veröffentlichungstag der Anmeldung: **30.11.2022**
(21) Anmeldenummer: 21175601.0
(22) Anmeldetag: 25.05.2021
(51) Int. Cl.: B64F 1/00, B64C 39/02, B64F 1/26, B64C 29/00, B64C 27/00, E01F 3/00

(54) **LANDESTATION FÜR EIN, INSBESONDERE VERTIKAL STARTENDES, LUFTFAHRZEUG SOWIE INTERAKTIONSVERFAHREN ZWISCHEN DIESER UND EINEM LUFTFAHRZEUG**

(71) Anmelder: All4Future GmbH, 25524 Itzehoe (DE)
(72) Erfinder: ENGEL, Gernot-Rüdifer, 25524 Itzehoe (DE); MAYER, Hanspeter, 8643 Kindberg (AT); WISSEL, Gerald, 23909 Ratzeburg (DE)
(74) Vertreter: Wirnsberger & Lerchbaum Patentanwälte OG

(57) **Zusammenfassung**

Die Erfindung betrifft eine Landestation (1) für ein Luftfahrzeug (3), insbesondere ein vertikal startendes Luftfahrzeug (3) (VTOL), wie eine Drohne, aufweisend eine Landefläche (2) zum Landen bzw. Starten des Luftfahrzeuges (3). Um ein störungsarmes Interagieren mit einem Luftfahrzeug, insbesondere Landen bzw. Starten des Luftfahrzeuges, zu ermöglichen, ist erfindungsgemäß vorgesehen, dass die Landefläche (2) von einer quer zur Landefläche (2) ausgerichteten Schalenwand (4) eingekesselt ist, um das startende bzw. landende Luftfahrzeug (3) mit der Schalenwand (4) zu umfassen.

Weiter betrifft die Erfindung ein Interaktionsverfahren einer Landestation (1) mit einem Luftfahrzeug (3), insbesondere einem vertikal startenden Luftfahrzeug (VTOL).

## Beschreibung

Die Erfindung betrifft eine Landestation für ein Luftfahrzeuge, insbesondere ein vertikal startendes Luftfahrzeug (VTOL), wie eine Drohne, aufweisend eine Landefläche zum Landen bzw. Starten des Luftfahrzeuges.

Weiter betrifft die Erfindung ein Interaktionsverfahren einer Landestation mit einem Luftfahrzeug, insbesondere einem vertikal startenden Luftfahrzeug (VTOL), wie einer Drohne, wobei das Luftfahrzeug von einer Landefläche der Landestation startet bzw. auf dieser landet.

Es ist aus dem Stand der Technik bekannt, auf Gebäuden für ein Landen oder Starten von vertikal startenden Luftfahrzeugen, auch als VTOL-Luftfahrzeuge ("vertical take-off and landing"-Luftfahrzeuge) bezeichnet, Landestationen vorzusehen. Zweckrichtung ist in der Regel, einen Güter- und/oder Personentransport per VTOL-Luftfahrzeug, wie etwa per Drohne, in eine bestehende urbane Infrastruktur zu integrieren. Hierzu werden häufig spezielle Landeflächen für Drohnen auf Dächern von Gebäuden vorgesehen, auf welchen die Drohne für beispielsweise eine Paketübergabe landen kann. Zur Steuerung eines Landevorganges der Drohne können Landestation und Drohne Mittel zur Funkkommunikation aufweisen, um mittels Funksignalübertragung zu kommunizieren.

So offenbart beispielsweise das Dokument US 10,196,155 B2 eine Landestation für eine Drohne, wobei ein von der Drohne geliefertes Paket an eine verfahrbare Transportplattform übergeben wird.

Um ein Landen einer Drohne auf einer Landeplattform zu erleichtern, ist weiter bekannt, eine Landeplattform mit aufklappbaren Führungsplatten auszustatten, um während eines Landens der Drohne Standfüße der Drohne mit den Führungsplatten in eine vorgesehene Landeposition zu führen. Dies ist beispielsweise im Dokument CN 204250382 U gezeigt.

Hier setzt die Erfindung an. Aufgabe der Erfindung ist es, eine Landestation der eingangs genannten Art anzugeben, welche ein störungsarmes Interagieren mit einem Luftfahrzeug, insbesondere Landen bzw. Starten des Luftfahrzeuges, ermöglicht. Im Besonderen soll ein emissionsarmes und bevorzugt energiesparendes Landen und/oder Starten des Luftfahrzeuges ermöglicht werden.

Weiter ist es ein Ziel, ein Interaktionsverfahren einer Landestation mit einem Luftfahrzeug der eingangs genannten Art anzugeben, welches ein störungsarmes Interagieren, mit einem Luftfahrzeug, insbesondere Landen bzw. Starten des Luftfahrzeuges, ermöglicht. Im Besonderen soll ein emissionsarmes und bevorzugt energiesparendes Landen und/oder Starten des Luftfahrzeuges ermöglicht werden.

Die Aufgabe wird erfindungsgemäß dadurch gelöst, dass bei einer Landestation der eingangs genannten Art die Landefläche von einer quer zur Landefläche ausgerichteten Schalenwand eingekesselt ist, um ein startendes bzw. landendes Luftfahrzeug mit der Schalenwand zu umfassen.

Ausgangspunkt der Erfindung ist die Überlegung, eine Landestation an die spezifischen Eigenschaften bzw. Erfordernisse moderner Luftfahrzeuge, insbesondere vertikal startende Luftfahrzeuge (VTOL), wie Drohnen, anzupassen. Diese zeichnen sich häufig durch eine präzise Steuerung aus, sodass ein Platzbedarf bzw. Flächenbedarf im Rahmen eines Landens bzw. Startens reduziert ist. Häufig emittieren die Luftfahrzeuge hohe Geräuschintensitäten, insbesondere in einem hochfrequenten Schallfrequenzbereich. Diese bilden sich üblicherweise mit einem Wirbelgeräusch, welches in der Regel von Druckausgleichsgeräuschen an Propellerblattspitzen von Propellerblättern des Luftfahrzeuges dominiert wird und häufig als breitbandiges Rauschen wahrnehmbar ist, sowie einem dem Wirbelgeräusch überlagerten, üblicherweise hochfrequenten, Rotationsgeräusch, welches in der Regel als Folge einer periodischen Luftverdrängung durch Propellerblätter des Luftfahrzeuges entsteht und häufig als im Wesentlichen harmonischer Ton, meist größer als 1000 Hz, wahrnehmbar ist. Dies gilt insbesondere häufig für durch einen Einsatz von Elektromotoren angetriebenen Propellern des Luftfahrzeuges. Weiter kommt außerdem bei einem Landen bzw. Starten eines Luftfahrzeuges, insbesondere eines VTOL-Luftfahrzeuges, vom Luftfahrzeug bzw. dessen Antrieb verursachten Fluidimpulse, üblicherweise Fluidströmungen und/oder Fluiddruckwellen, insbesondere Luftdruckwellen und/oder Luftströmungen, und deren Wechselwirkungen mit der Landefläche besondere Bedeutung hinsichtlich eines Energieverbrauches zu. Fluidimpuls bezeichnet im Folgenden eine Fluiddruckwelle und/oder Fluidströmung, meist Luftströmung, welche insbesondere von einem Antrieb des Luftfahrzeuges verursacht sein kann. Meist ist das Fluid antriebsabhängig ein Gas, in der Regel Luft.

Grundlage der Erfindung ist die Idee, ein Luftfahrzeug während eines Landens bzw. Startens des Luftfahrzeuges bzw. einen hierfür vorgesehenen Landebereich auf der Landefläche mit einer Schalenwand zu umfassen. Dadurch können in eine Umgebung abgestrahlte störende Emissionen des Luftfahrzeuges bzw. Immissionen für eine Umgebung der Landestation, wie Lärm und/oder Lichtabstrahlung, reduziert werden. Im Besonderen ist ermöglicht, durch die Schalenwand, insbesondere je nach deren Form und/oder Ausrichtung, die Fluidimpulsausbreitung, insbesondere Fluidströmung, in einem von der Schalenwand umfassten Schalenwandinnenbereich vorteilhaft zu beeinflussen.

Wenn die Landestation mit einer Landefläche und einer Schalenwand gebildet ist, wobei die Landefläche von der Schalenwand eingekesselt ist, also die Landefläche bzw. ein Bereich oberhalb der Landefläche zur Umfassung eines landenden bzw. startenden Luftfahrzeuges von der Schalenwand umgeben ist, können Emissionen des landenden oder startenden Luftfahrzeuges, insbesondere Lärm, Lichtabstrahlung und/oder Schallemissionen, stark reduziert bzw. in hohem Maße verhindert werden. Dies gilt im Besonderen für Emissionsbelastungen in Richtungen im Wesentlichen parallel zur Landefläche. Die Emissionen können im Besonderen von der Schalenwand absorbiert und/oder mit der Schalenwand reflektiert, insbesondere in eine Richtung quer bzw. im Wesentlichen orthogonal zur Landefläche umgelenkt, werden. Insbesondere ist damit erreichbar, dass hochfrequente Geräuschemissionen des Luftfahrzeuges - wie vorgenannt ausgeführt -, insbesondere in einem Schallwellenfrequenzbereich oberhalb von 1000 Hz, reduzierbar sind. Diese zeichnen sich üblicherweise durch ein besonders ausgeprägtes akustisches Störpotenzial für Menschen in einem Nahbereich des Luftfahrzeuges aus. Im Besonderen kann durch Reflexion von vom Luftfahrzeug emittierten Schallwellen an der Schalenwand ein Schalldruck bzw. eine Schallintensität der Schallwellen stark reduziert werden, indem eine von den Schallwellen zurückgelegte Weglänge erhöht wird. Der Schalldruck bzw. die Schallintensität einer Schallwelle verhalten sich üblicherweise umgekehrt proportional zur Entfernung von einer die Schallwelle emittierenden Schallquelle, der Schalldruck in der Regel umgekehrt proportional zum Abstand und die Schallintensität umgekehrt proportional zum quadratischen Abstand von der Schallquelle. Es hat sich beispielsweise gezeigt, dass mit einer Schalenwand ein Schalldruckpegel eines startenden VTOL-Luftfahrzeuges von 100 dB(A) auf 75 dB(A) reduzierbar ist, indem die Landefläche bzw. das Luftfahrzeug mit der Schalenwand umfasst wurde, wobei der Schalldruckpegel an einer von der Landefläche abgewandten Seite der Schalenwand, also außerhalb eines von der Schalenwand umfassten Schalenwandinnenbereiches, bestimmt wurde.

Die Schalenwand weist in der Regel einen von der Landefläche abgewandten oberen Schalenwandrand auf, welcher eine Durchflugsöffnung für einen Durchflug eines Luftfahrzeuges bildet. Ein dem oberen Schalenwandrand gegenüberliegender unterer Schalenwandrand kann positionsfest mit einem Boden oder der Landefläche verbunden sein. Die Schalenwand bildet üblicherweise einen ringartigen Umbau, um das startende bzw. landende Luftfahrzeug bzw. einen hierfür vorgesehenen Landebereich auf der Landefläche mit der Schalenwand zu umfassen. Die Landefläche ist meist im Wesentlichen eben ausgebildet. Häufig ist die Landefläche als Teil einer relativ zum Boden erhöhten Plattform ausgebildet.

Starten bzw. Startvorgang eines Luftfahrzeuges bezeichnet üblicherweise einen Prozess bzw. jene Zustände des Luftfahrzeuges, in welchen im Rahmen eines Startmanövers sich das Luftfahrzeug unter Auftriebsnutzung noch auf der Landefläche befindet, ein Abheben des Luftfahrzeuges von der Landefläche sowie einen fliegenden Zustand innerhalb des von der Schalenwand umfassten Schalenwandinnenbereiches. Entsprechend bezeichnet Landen bzw. Landevorgang eines Luftfahrzeuges üblicherweise einen Prozess bzw. jene Zustände des Luftfahrzeuges, in welchen im Rahmen eines Landemanövers sich das Luftfahrzeug innerhalb des von der Schalenwand umfassten Schalenwandinnenbereiches befindet, ein Aufsetzen des Luftfahrzeuges auf der Landefläche sowie einen unter Auftriebsnutzung auf der Landefläche befindlichen Zustand des Luftfahrzeuges. Schalenwandinnenbereich bezeichnet zweckmäßig üblicherweise einen Bereich, insbesondere einen Landebereich auf bzw. oberhalb der Landefläche, welcher von der Schalenwand umfasst bzw. ummantelt wird.

Von Vorteil ist es, wenn die Schalenwand, insbesondere Schalenwandsegmente, mit welchen die Schalenwand gebildet ist, derart steuerbar bewegbar, vorzugsweise kippbar, und/oder steuerbar größenvariierbar sind, dass der von der Schalenwand umfasste Schalenwandinnenbereich größenveränderbar ist. Dadurch kann für ein Landen bzw. Starten eines Luftfahrzeuges der Schalenwandinnenbereich an das jeweilige Luftfahrzeug und/oder dessen Position und/oder dessen Flugzustand angepasst werden. Ein Kollisionspotenzial des Luftfahrzeuges mit der Schalenwand ist reduzierbar und die Schalenwand kann für eine Emissionsreduzierung und/oder Strömungsleitung abgestimmt bewegt werden. Günstig ist es, wenn die Schalenwand, insbesondere die Schalenwandsegmente, derart steuerbar bewegbar und/oder steuerbar größenvariierbar sind, dass ein Volumen des Schaleninnenwandbereiches größenveränderbar ist.

Zweckmäßig ist es, wenn die Schalenwand mit mehreren Schalenwandsegmenten gebildet ist, wobei die Schalenwandsegmente derart steuerbar bewegbar, vorzugsweise kippbar, und/oder größenvariierbar sind, dass in einem zur Landefläche im Wesentlichen parallelen Querschnitt eine von der Schalenwand begrenzte Querschnittsfläche größenvariierbar ist. Dadurch kann für ein Landen oder Starten eines Luftfahrzeuges die Querschnittsfläche der Schalenwand je nach Position und/oder Zustand des Luftfahrzeuges angepasst werden. Beispielsweise kann die Querschnittsfläche für einen Flug in bzw. aus dem Schalenwandinnenbereich vergrößert werden und bei einer Positionierung des Luftfahrzeuges auf der Landefläche verkleinert werden. Zweckmäßig ist es, wenn dadurch eine vom oberen Schalenwandrand bzw. der Durchflugsöffnung definierte Durchflugsöffnungsfläche, durch welche ein Luftfahrzeug für ein Landen oder Starten hindurchfliegen kann, größenvariierbar ist.

Praktisch ist es, wenn die Schalenwand größenvariierbar ist, indem zumindest eine Länge der Schalenwand steuerbar variierbar ist. Die Länge kann eine Erstreckung der Schalenwand in Richtung eines Umfanges um die Landefläche oder quer, insbesondere im Wesentlichen orthogonal, zur Landefläche sein. Beispielsweise kann dadurch eine Höhe der Schalenwand steuerbar variierbar sein. Vorzugsweise gilt dies für mehrere Längen der Schalenwand, welche insbesondere im Wesentlichen orthogonal zueinander ausgerichtet sind. Zweckmäßig ist es, wenn in analoger Weise zumindest ein oder mehrere der Schalenwandsegmente größenvariierbar sind, indem zumindest eine Länge des Schalenwandsegmentes steuerbar variierbar ist. Entsprechend kann die Länge, insbesondere mehrere Längen, des Schalenwandsegmentes, wie zur Schalenwand angeführt, ausgerichtet sein. Beispielsweise können mehrere Schalenwandsegmente teleskopartig relativ zueinander verfahrbar, insbesondere ausfahrbar, sein, um die Länge der Schalenwand zu variieren. Insbesondere kann in analoger Weise vorgesehen sein, dass ein Schalenwandsegment mit Schalenwandsubsegmenten gebildet ist, wobei Schalenwandsubsegmente teleskopartig relativ zueinander verfahrbar, insbesondere ausfahrbar, sind, um die Länge des Schalenwandsegmentes zu variieren. Alternativ oder kumulativ kann vorgesehen sein, dass die Schalenwand, insbesondere das zumindest eine Schalenwandsegment, zumindest einen Bereich, insbesondere Hohlraum, aufweist, dessen Volumen, insbesondere hydraulisch und/oder pneumatisch, veränderbar ist, um die Schalenwand bzw. das Schalenwandsegment größenzuvariieren, insbesondere dessen Länge zu ändern. Zweckmäßig kann die Schalenwand, insbesondere das Schalenwandsegment, mehrere solche Bereiche, insbesondere Hohlräume aufweisen. Praktikabel ist es, wenn die Schalenwand, insbesondere das Schalenwandsegment, zumindest ein Zugangsventil und/oder zumindest ein Abflussventil aufweist, über welches dem Hohlraum ein, üblicherweise gasförmiges und/oder flüssiges, Medium zuführbar bzw. vom Hohlraum abführbar ist, um eine Ausdehnung des Hohlraumes zu verändern.

Es hat sich bewährt, wenn die Schalenwandsegmente derart steuerbar bewegbar, vorzugsweise kippbar sind, dass eine Neigung der Schalenwandsegmente relativ zur Landefläche, insbesondere unabhängig voneinander, variierbar ist. Dadurch kann die Schalenwand besonders praktikabel an eine Flugbahn eines startenden bzw. landenden Luftfahrzeuges angepasst werden. Weiter ist dadurch ermöglicht, auf eine Fluidimpulsausbreitung bzw. einen Fluidströmungsfluss, insbesondere Luftströmungsfluss, im Schalenwandinnenbereich Einfluss zu nehmen, insbesondere eine von einem startenden bzw. landenden Luftfahrzeug verursachten Fluidimpuls, insbesondere Fluidströmung, wie Luftströmung, abhängig von der Neigung der Schalenwandsegmente mit diesen zu führen. Bewährt hat es sich, wenn die Schalenwandsegmente dabei jeweils um zumindest eine, meist im Wesentlichen parallel zur Landefläche ausgerichteten, Kippachse kippbar sind. Günstig ist es, wenn ein Kippwinkel zwischen dem jeweiligen Schalenwandsegment und der Landefläche zwischen 45° und 180°, insbesondere 60° und 135°, variierbar ist. Ein Neigungswinkel zwischen 170° und 180°, insbesondere etwa 180°, entspricht dabei im Wesentlichen einem gänzlichen Umkippen des Schalenwandsegmentes, sodass dieses im Wesentlichen parallel zur Landefläche ausgerichtet ist. Dies kann günstig sein, um eine Landefläche, beispielsweise für eine Notlandung oder einen Schrägstart, zu vergrößern. Vorteilhaft ist es, wenn das jeweilige Schalenwandsegment bei unterschiedlichen, insbesondere stufenlos, einstellbaren Kippwinkeln zwischen Schalenwandsegment und Landefläche feststellbar ist. Hierzu kann jeweils eine Feststellvorrichtung vorgesehen sein, welche die Schalenwandsegmente formschlüssig und/oder kraftschlüssig bei einem jeweiligen Kippwinkel bzw. einer entsprechenden Kippposition feststellt. Praktikabel ist es, wenn die Schalenwandsegmente mit steuerbaren Aktuatoren bewegbar, insbesondere kippbar, sind. Es hat sich bewährt, wenn jedem Schalenwandsegment ein oder mehrere, insbesondere eigene, Aktuatoren zugeordnet sind, um das Schalenwandsegment mit diesen zu bewegen. Die Aktuatoren können beispielsweise mit steuerbar längenveränderlichen Aktuatorelementen, insbesondere Aktuatorstangen, ausgebildet sein, um mit einer Längenveränderung der Aktuatorelemente die Schalenwandsegmente zu bewegen. Die Aktuatoren können beispielsweise elektrisch, pneumatisch oder hydraulisch angetrieben sein.

Zweckmäßig ist es, wenn sich ein Schalenwandsegment im Wesentlichen entlang einer überwiegenden, bevorzugt gesamten, Höhe der Schalenwand erstreckt bzw. diese bildet. Höhe bezeichnet üblicherweise eine Richtung quer, insbesondere orthogonal, zur Landefläche. Für eine Fluidimpulsleitung, insbesondere Fluidströmungsleitung, ist es vorteilhaft, wenn zumindest eines der Schalenwandsegmente mit mehreren Schalenwandsubsegmenten gebildet ist, deren Neigung unabhängig voneinander steuerbar einstellbar ist. Hierzu können die Schalenwandsubsegmente über eine oder mehrere Gelenkverbindungen miteinander verbunden sein. Die Schalenwandsubsegmente sind üblicherweise relativ zueinander steuerbar verkippbar miteinander verbunden. Zweckmäßig ist es, wenn das Schalenwandsegment entlang der Höhe der Schalenwand mit mehreren miteinander verbundenen, insbesondere relativ zueinander steuerbar kippbaren, Schalenwandsubsegmenten gebildet ist. Praktikabel können mehrere, insbesondere der Großteil, bevorzugt im Wesentlichen sämtliche, der Schalenwandsegmente derart ausgebildet sein. Hierzu können die Schalenwandsubsegmente entsprechend, insbesondere vorstehenden Ausführungen, mit zumindest einem Aktuator bewegbar sein. Praktikabel ist es, wenn ein oder mehrere erste Schalenwandsubsegmente derart relativ zu anderen der Schalenwandsubsegmenten steuerbar verkippbar sind, sodass die mit dem Schalenwandrand gebildete Durchflugsöffnung verschlossen wird. Die ersten Schalenwandsubsegmente können durch Verkippen ein Dach bilden, um ein auf der Landefläche befindliches Luftfahrzeug vor Regen zu schützen.

Vorteilhaft ist es, wenn eine der Landefläche zugewandte Schalenwandinnenfläche der Schalenwand größenveränderbar ist, um die Schalenwandinnenfläche an eine durch ein Bewegen der Schalenwand, insbesondere Schalenwandsegmente, geänderte Größe, insbesondere Querschnittsflächenänderung, des Schalenwandinnenbereiches anzupassen. Zweckmäßig ist es, wenn die Schalenwandinnenfläche größenveränderbar ist, um bei unterschiedlichen Bewegungspositionen, insbesondere während einem Bewegen, der Schalenwand eine, bevorzugt im Wesentlichen gänzliche, Umfassung des Schalenwandinnenbereiches, insbesondere des Landebereiches bzw. des landenden oder startenden Luftfahrzeuges, mit der Schalenwand bzw. der Schalenwandinnenfläche zu gewährleisten. Zweckmäßig ist es, wenn die Schalenwandsegmente derart miteinander verbunden und/oder zueinander ausgerichtet sind, dass dies umgesetzt wird. Auf diese Weise kann die Schalenwandinnenfläche an einen jeweiligen Bewegungszustand, insbesondere Kippzustand, der Schalenwand angepasst werden. Im Besonderen kann dadurch eine gänzliche Umfassung des Schalenwandinnenbereiches, insbesondere Landebereiches, in unterschiedlichen Bewegungszuständen, insbesondere Kippzuständen, der Schalenwand bzw. Schalenwandsegmente gewährleistet werden. Im Speziellen können durch ein Bewegen, insbesondere Kippen, der Schalenwandsegmente entstehende Lücken zwischen den Schalenwandsegmenten, durch welche von einem Zentrum der Landefläche bzw. darauf befindlichem Luftfahrzeug emittierte parallel zur Landefläche ausbreitende Emissionen ungebrochen an der Schalenwand aus dem Schalenwandinnenbereich austreten würden, verhindert werden. Günstig ist es, wenn die Schalenwandsegmente, insbesondere entlang einer Umfangsrichtung der Schalenwand, miteinander verbunden sind. Hierzu können zwischen den Schalenwandsegmenten, insbesondere elastisch, verformbare Zwischensegmentelemente angeordnet sein, sodass bei einem Bewegen, insbesondere Verkippen, der Schalenwandsegmente die Zwischensegmentelemente, insbesondere elastisch, verformt werden, um die Schalenwandinnenfläche größenzuverändern. Alternativ oder kumulativ kann es günstig sein, wenn mehrere der Schalenwandsegmente, insbesondere teleskopartig, ineinander verschiebbar und/oder einander überlappend ausgebildet sind, um bei einem Bewegen, insbesondere Verschwenken, der Schalenwandsegmente die Schalenwandinnenfläche größenzuverändern. Auf diese Weise kann eine gänzliche Umfassung des Schalenwandinnenbereiches mit der Schalenwand in unterschiedlichen Bewegungspositionen, insbesondere während einer Bewegung, der Schalenwand, insbesondere Schalenwandsegmente, sichergestellt werden. Zweckmäßig können beispielsweise, üblicherweise in Umfangsrichtung der Schalenwand, unmittelbar benachbarte Schalenwandsegmente einander überlappend ausgebildet sein.

Die Schalenwandinnenfläche bezeichnet zweckmäßig üblicherweise jene Teile einer Oberfläche der Schalenwand, welche aus Sicht eines Zentrums der Landefläche unverdeckt gesehen werden können bzw. darstellbar sind, also entsprechend von sich geradlinig vom Zentrum der Landefläche in sämtliche Richtungen ausbreitenden Emissionsstrahlen, insbesondere Schallwellen, getroffen würden.

Zur Fluid- bzw. Luftströmungsleitung ist es günstig, wenn die Schalenwandinnenfläche zumindest abschnittsweise, insbesondere überwiegend, bevorzugt im Wesentlichen gänzlich, als Rotationsfläche, insbesondere als Segment eines Rotationsparaboloids, ausgebildet ist. Eine Rotationsachse der Rotationsfläche ist dabei üblicherweise quer, insbesondere orthogonal, zur Landefläche ausgerichtet und verläuft vorzugsweise durch ein Zentrum der Landefläche. Günstig ist es, wenn die Schalenwandinnenfläche aus Sicht von der Landefläche aus zumindest abschnittsweise, insbesondere überwiegend, bevorzugt im Wesentlichen gänzlich, konkav gewölbt ist.

Die Schalenwandinnenfläche ist vorzugsweise derart ausgebildet, dass zumindest abschnittsweise, vorzugsweise entlang einer überwiegenden, bevorzugt im Wesentlichen gesamten, Höhenerstreckung der Schalenwand, ein Innendurchmesser, insbesondere eine Querschnittsfläche, der Schalenwand mit zunehmendem Abstand von der Landefläche zunimmt bzw. die Schalenwand entsprechend steuerbar ausrichtbar bzw. bewegbar ist. Dadurch können Emissionen und/oder Fluidimpulse, insbesondere Fluidströmungen, üblicherweise Luftströmungen, des Luftfahrzeuges besonders praktikabel umgelenkt werden. Der Innendurchmesser bzw. Flächenquerschnitt der Schalenwand wird üblicherweise im Wesentlichen parallel zur Landefläche gemessen. Es hat sich bewährt, wenn die Schalenwand, insbesondere die Schalenwandinnenfläche, in einem zur Landefläche parallelen Querschnitt im Wesentlichen eckenfrei ausgebildet ist, beispielsweise ellipsenförmig oder kreisförmig. Dies hat sich als günstig für eine Fluidimpuls- bzw. Fluidströmungsleitung mit der Schalenwand im Schalenwandinnenbereich gezeigt. Vorzugsweise gilt dies für eine überwiegende Höhenerstreckung der Schalenwand. Vom Luftfahrzeug, insbesondere dessen Antrieb, meist Propeller, verursachte Fluidströmungen sind üblicherweise Gasströmungen bzw.

Luftströmungen, im Folgenden häufig vereinfacht unter dem Begriff einer vom Luftfahrzeug verursachten Luftströmung subsumiert. Es versteht sich, dass die Luftströmung dabei, insbesondere je nach Antrieb, auch eine andere Art von Gasströmung sein kann.

Zur effizienten Fluid- bzw. Luftströmungsbeeinflussung ist es günstig, wenn die Schalenwand eine oder mehrere durchflusssteuerbare, insbesondere steuerbar verschließbare, Durchströmöffnungen aufweist, um einen Durchfluss eines Fluidimpulses, insbesondere einer Fluiddruckwelle und/oder Fluidströmung, wie Luftströmung, vom Schalenwandinnenbereich über die Durchströmöffnungen durch die Schalenwand hindurch zu steuern, insbesondere zu regeln. Hierzu kann eine steuerbare Durchströmöffnungsklappe vorhanden sein, mit welcher die Durchströmöffnung steuerbar, insbesondere verschließbar bzw. öffenbar ist. Der Fluidimpuls ist üblicherweise eine Fluiddruckwelle und/oder Fluidströmung, insbesondere Luftströmung. Dadurch können von einem im Schalenwandinnenbereich befindlichen Luftfahrzeug verursachte Fluidimpulse über die Durchströmöffnungen gesteuert durch die Schalenwand hindurch geleitet werden. Insbesondere kann im Schaleninnenwandbereich eine Ausbildung eines laminaren Strömungsflusses unterstützt werden. Zweckmäßig ist es, wenn dabei unterschiedliche Fluiddurchflüsse durch die Durchströmöffnung steuerbar einstellbar sind. Es versteht sich, dass die Durchströmöffnungen bzw. deren Steuerung in der Regel unabhängig von einer Bewegung der Schalenwand umgesetzt bzw. von dieser entkoppelt ist. Damit kann in einem positionsfesten Zustand der Schalenwand ein Fluidimpuls- bzw. Fluiddurchfluss durch die Durchströmöffnung variabel gesteuert werden. Günstig ist es, wenn eine Durchströmöffnungsquerschnittsfläche der Durchströmöffnung steuerbar größenvariierbar ist, um einen durch die Durchströmöffnung fließenden Fluidimpuls bzw. eine Fluidströmung, insbesondere deren Volumenstrom und/oder Strömungsgeschwindigkeit, zu steuern, insbesondere zu regeln. Dies kann mit einem Strömungsventil umgesetzt sein, mit welchem die Durchströmöffnung gebildet ist. Zweckmäßig kann dabei vorgesehen sein, dass unterschiedliche Durchströmöffnungsquerschnitte der Durchströmöffnung, bevorzugt stufenlos, steuerbar einstellbar sind. Für eine effiziente Fluidimpulsleitung ist es günstig, wenn mehrere Durchströmöffnungen vorgesehen sind. Die Durchströmöffnungen sind üblicherweise beabstandet voneinander, vorzugsweise in Draufsicht auf die Landefläche entlang eines Umfanges um die Landefläche verteilt, in der Schalenwand angeordnet. Die jeweilige Durchströmöffnung ist üblicherweise mit einem Kanal in der Schalenwand, insbesondere einem oder mehreren der Schalenwandsegmenten, gebildet, um Fluidimpulse, insbesondere Fluidströmungen über den Kanal durch die Schalenwand hindurch zu leiten. Zum Einstellen eines sich im Schalenwandinnenbereich bildenden Strömungsflusses ist es besonders praktikabel, wenn die Schalenwand steuerbar bewegbar und zumindest eine vorgenannte Durchströmöffnung vorhanden ist.

Zweckmäßig kann die Landestation ein oder mehrere Sensoren aufweisen, um eine Position und/oder Geschwindigkeit eines landenden bzw. startenden Luftfahrzeuges zu bestimmen. Üblicherweise ist eine Steuereinrichtung vorgesehen, um die Bewegung der Schalenwand, insbesondere deren Schalenwandsegmente, und/oder die Durchströmöffnungen bzw. einen Luftdurchfluss durch diese zu steuern, insbesondere zu regeln. Zweckmäßig können Messdaten der Sensoren an die Steuereinrichtung übermittelt werden, um mit der Steuereinrichtung eine Bewegung der Schalenwand und/oder einen Luftdurchfluss durch die Durchströmöffnungen abhängig von den Messdaten zu steuern, insbesondere zu regeln. Praktikabel ist es, wenn zumindest einer der Sensoren als Lasersensor, insbesondere als Lidar ausgebildet ist, wobei mit dem Lasersensor ein Laserstrahl emittiert und nach Reflexion am Luftfahrzeug mit dem Lasersensor detektiert wird. Üblicherweise wird dann mit einer computerunterstützten Auswerteeinheit mittels Laufzeitauswertung des Laserstrahls eine Position, Größe, Ausrichtung und/oder Geschwindigkeit des Luftfahrzeuges bestimmt. Bevorzugt ist der Lasersensor als Rotations-Laser ausgebildet, wobei der Laserstrahl unter variierendem Raumwinkel emittiert wird, um einen Raumbereich in dem sich ein Luftfahrzeug befindet bzw. das Luftfahrzeug abzutasten. Zweckmäßig kann auf diese Weise ein, insbesondere räumliches, Bild vom Luftfahrzeug erzeugt werden. Praktikabel ist es, wenn mit der Auswerteeinheit aus den Messdaten ermittelte Kenndaten, insbesondere Bilddaten, des Luftfahrzeuges mit gespeicherten Konstruktionsdaten, insbesondere CAD-Konstruktionsdaten, des Luftfahrzeuges verglichen werden. Dadurch kann eine Präzision in der Auswertung, insbesondere eine Bestimmung von Größe und/oder Ausrichtung des Luftfahrzeuges, verbessert werden. Zweckmäßig kann eine Auswertung mit der Auswerteeinheit abhängig von Wetterparametern und/oder Luftgeschwindigkeit, welche häufig mit zumindest einem Bestimmungssensor gemessen werden, erfolgen.

Von Vorteil ist es, wenn die Landestation ein oder mehrere Strömungsleitelemente aufweist, um einen von einem startenden bzw. landenden Luftfahrzeug erzeugten zur Landefläche hin gerichteten Fluidimpuls mit den Strömungsleitelementen in Richtung zur Schalenwand, bevorzugt im Wesentlichen parallel zur Landefläche, umzulenken. Der Fluidimpuls ist üblicherweise eine Fluiddruckwelle und/oder Fluidströmung, insbesondere Luftströmung. Der vom Luftfahrzeug erzeugte Fluidimpuls ist in der Regel quer, insbesondere orthogonal, zur Landefläche auf die Landefläche hin gerichtet. Der Fluidimpuls, insbesondere die Fluidströmung, wird dabei vorzugsweise zur Schalenwand, insbesondere zu der oder den Durchströmöffnungen, umgelenkt. Dies ermöglicht es Fluid- bzw. Luftverwirbelungen zu vermeiden, welche in der Regel durch Reflexion von durch ein Luftfahrzeug erzeugtem Fluidimpuls, insbesondere Fluid- bzw. Luftströmung, an einer Landefläche erzeugt werden. Die Strömungsleitelemente können, insbesondere zumindest teilweise, oberhalb oder unterhalb der Landefläche angeordnet sein. Praktikabel ist es, wenn die Strömungsleitelemente Teil eines die Landefläche bildenden Landebodens sind oder in diesen integriert sind. Zweckmäßig ist es, wenn die Landefläche zumindest teilweise fluid- bzw. luftströmungsdurchlässig ausgebildet ist, sodass eine auf die Landefläche auftreffende, üblicherweise orthogonal zu dieser ausgerichtete, Fluid- bzw. Luftströmung durch die Landefläche hindurchströmen kann, um zu einem unter der Landefläche angeordneten Strömungsleitelement zu gelangen. Hierzu kann die Landefläche steuerbar verschließbare Fluiddurchlassöffnungen aufweisen, sodass bei geöffneten Luftdurchlassöffnungen die Fluidströmung, insbesondere Luftströmung, zumindest teilweise über die Fluiddurchlassöffnungen durch die Landefläche hindurchtreten kann. Für eine effiziente Fluidströmungsumleitung ist es günstig, wenn das zumindest eine Strömungsleitelement ein oder mehrere quer zur Landefläche ausgerichtete Strömungsleitflächen aufweist, um die auf das Strömungsleitelement treffende Fluidströmung mit den Strömungsleitflächen umzuleiten. Die Strömungsleitfläche kann, insbesondere konkav, gekrümmt ausgebildet sein. Praktisch ist es, wenn die Strömungsleitflächen steuerbar, insbesondere regelbar, verschwenkbar sind. Dadurch können unterschiedliche Neigungswinkel der Strömungsleitflächen relativ zu einer Fluidströmungsrichtung einer auf diese treffenden Fluidströmung eingestellt werden, um die Fluidströmung neigungswinkelabhängig in unterschiedliche Richtungen umzuleiten. Üblicherweise ist vorgesehen, dass mit den Strömungsleitelementen die auf die Strömungsleitelemente treffende Fluidströmung in Richtung Seitenwandschale umgeleitet wird. Das Strömungsleitelement kann mit einem oder mehreren Luftleitkanälen gebildet sein, um die Fluidströmung über die Luftleitkanälen umzulenken. Die Strömungsleitflächen können dann mit Kanalwandabschnitten der Luftleitkanäle gebildet sein.

Günstig ist es, wenn ein oder mehrere Luftführungselemente, beispielsweise gebildet mit einem oder mehreren Luftleitkanälen, vorgesehen sind, um den von dem zumindest einen Strömungsleitelement umgeleiteten Fluidimpuls, insbesondere die Fluidströmung, meist Luftströmung, zumindest teilweise, vorzugsweise überwiegend, in eine Richtung quer, insbesondere orthogonal, zur Landefläche umzuleiten, um mit dem Fluidimpuls, insbesondere der Fluid- bzw. Luftströmung, einen von der Landefläche weggerichteter Aufwindimpuls, insbesondere eine Aufwindströmung, im Schalenwandinnenbereich, bevorzugt in Richtung Luftfahrzeug, zu erzeugen. Dadurch kann der vom Luftfahrzeug verursachte zur Landefläche gerichtete Fluidimpuls, meist die Fluid- bzw. Luftströmung, in eine zumindest ungefähr dieser entgegengerichtete Richtung umgelenkt werden, wobei insbesondere Fluid- bzw. Luftverwirbelungen vermeidbar sind. Dadurch kann ein gerichteter Fluidimpuls, insbesondere eine gerichtete Fluidströmung, in Richtung Luftfahrzeug gebildet werden. Günstig ist es, wenn das Strömungsleitelement und/oder Luftführungselement mit einem oder mehreren Luftleitkanälen gebildet sind, um einen Fluidimpuls, insbesondere eine Fluidströmung, mit Kanalwänden der Luftleitkanäle umzulenken. Praktikabel kann das Strömungsleitelement und das Luftführungselement mit einem gemeinsamen Luftleitkanal bzw. aneinander anschließenden Luftleitkanälen gebildet sein. Die Luftleitkanäle können zumindest teilweise oder gänzlich im Landeboden versenkt sein. Beispielsweise sind die Luftleitkanäle derart ausgebildet, dass in einem ersten Luftkanalsegment der Luftleitkanäle eine von einem Luftfahrzeug in Richtung, üblicherweise orthogonal, zur Landefläche gerichteten Fluidimpuls, insbesondere Fluidströmung, in Richtung zur Schalenwand, bevorzugt im Wesentlichen parallel zur Landefläche, umgelenkt wird, wonach in einem zweiten Luftkanalsegment der Luftleitkanäle der Fluidimpuls, insbesondere die Fluidströmung, in eine Richtung quer, bevorzugt im Wesentlichen orthogonal zur Landefläche, umgelenkt wird, um eine von der Landefläche weggerichtete Aufwindströmung im Schalenwandinnenbereich, bevorzugt orthogonal zur Landefläche bzw. in Richtung des Luftfahrzeuges, zu erzeugen. Der Aufwindimpuls kann eine Fluiddruckwelle bzw. Fluidströmung sein. Zweckmäßig kann auf diese Weise in Kombination mit der von der Schalenwand gebildeten Umfassung eine stabile Aufwindströmung erzeugt werden, welche die vom Luftfahrzeug verursachte zur Landefläche gerichtete Fluid- bzw. Luftströmung seitlich umgibt. Dadurch ist eine ausgeprägte akustische Dämpfung in Bezug auf Lärmemissionen des Luftfahrzeuges erreichbar. Eine solche Ausgestaltung hat sich insbesondere in Kombination mit vorgenannter Durchströmöffnung und/oder bewegbar, insbesondere kippbar, ausgebildeten Schalenwand als besonders effizient zur Fluid- bzw. Luftströmungsleitung herausgestellt.

Zur Fluidimpulsleitung, insbesondere Fluiddruckwellenleitung, ist es günstig, wenn das Strömungsleitelement und/oder Luftführungselement ausgebildet ist, eine Fluiddruckwelle des Fluids unter Bildung von konstruktiver Interferenz zu leiten, um eine Druckamplitude der Fluiddruckwelle zu erhöhen. Dies kann praktikabel umgesetzt sein, wenn ein, vorzugsweise überwiegender, Teil der Fluiddruckwelle unter Bildung eines Phasensprunges reflektiert wird, um die Fluiddruckwellen mit sich selbst zu interferieren. Dies kann beispielsweise durch Reflexion an einem offenen Ende eines Luftleitkanals umgesetzt sein, mit welchem das Strömungsleitelement und/oder Luftführungselement gebildet ist. Im Besonderen kann auf diese Weise die Fluiddruckwelle unter Resonanz geleitet werden, um deren Druckamplitude zu erhöhen. Zweckmäßig kann die Fluiddruckwelle durch einen Luftleitkanal des Strömungsleitelementes und/oder Luftführungselementes geleitet werden, wobei im Luftleitkanal stehende Druckwellen gebildet werden, um die Druckamplitude zu erhöhen. Günstig ist es, wenn eine Länge des Luftleitkanals steuerbar variierbar ist, um die Reflexion bzw. Bildung von Resonanz zu unterstützen. Zweckmäßig können ein oder mehrere Druckwellensensoren zur Messung einer Amplitude und/oder Frequenz der Fluiddruckwelle vorhanden sein, um Länge des Luftleitkanals abhängig von Messdaten der Druckwellensensoren zu steuern, insbesondere zu regeln. Dies kann mit einer computerunterstützten Einstelleinheit, beispielsweise der Steuereinrichtung, erfolgen.

Vorteilhaft ist es, wenn die Landefläche stoßgedämpft und/oder gefedert gelagert ist, um bei einem Abheben bzw. Landen eines Luftfahrzeuges von bzw. auf der Landefläche auf die Landefläche wirkende Stoßkraftspitzen zu dämpfen. Hierzu können ein oder mehrere Dämpfungselemente und/oder Federelemente vorhanden sein, mit, insbesondere auf, welchen die Landefläche, üblicherweise relativ zu einem Untergrund, gedämpft schwingungsfähig gelagert ist. Beispielsweise kann die Landefläche mit einer relativ zu einem Untergrund stoßgedämpften und/oder gefederten Landeplattform gebildet sein.

Günstig ist es, wenn ein Servicebereich vorhanden ist. Dieser kann beispielsweise dazu dienen, das Luftfahrzeug zu parken, zu warten, mit Energie zu versorgen, insbesondere einen Luftfahrzeugakkumulator zu tauschen, und/oder mit Gütern bzw. Personen zu beladen oder zu entladen. Praktisch ist es, wenn die Landefläche mit einer Verschiebeeinrichtung steuerbar verfahrbar ist, um ein auf der Landefläche befindliches Luftfahrzeug von einer Landeposition in den Servicebereich zu überführen, bevorzugt abzusenken. Zweckmäßig kann sich der Servicebereich außerhalb des Schalenwandinnenbereiches befinden. Günstig ist es, wenn die Landefläche mit der Verschiebeeinrichtung steuerbar absenkbar ist, um ein auf der Landefläche befindliches Luftfahrzeug mit Absenken der Landefläche aus dem Schalenwandinnenbereich in den Servicebereich, welcher beispielsweise unterhalb der Landeposition bzw. des Schalenwandinnenbereiches angeordnet sein kann, zu verfahren. Die Verschiebeeinrichtung kann beispielsweise mit einer Hubvorrichtung für ein Verfahren der Landefläche orthogonal zu dieser ausgebildet sein. Praktisch ist es, wenn die Landeposition und der Servicebereich auf unterschiedlichen, insbesondere übereinander angeordneten, Etagen angeordnet sind. Zweckmäßig kann ein Parkbereich zum Parken des Luftfahrzeuges vorgesehen sein, wobei der Servicebereich und Parkbereich über ein Transportmittel derart verbunden sind, dass mit dem Transportmittel ein Luftfahrzeug zwischen Servicebereich und Parkbereich verfahrbar ist. Das Transportmittel kann beispielsweise eine Förderanlage, beispielsweise ein Stetigförderer, wie ein Förderband, oder Unstetigförderer, wie ein Transportwagen, sein. Die Verschiebeeinrichtung bzw. Hubvorrichtung kann eine steuerbar verfahrbare Transportplattform sein, auf welcher die Landefläche angeordnet bzw. als dessen Teil die Landefläche ausgebildet ist. In einer einfachen Ausprägung kann der Servicebereich unterhalb der Landeposition bzw. des Schalenwandinnenbereiches angeordnet sein, sodass die Landefläche durch Absenken, insbesondere unmittelbar, in den Servicebereich verfahrbar ist.

Praktisch ist es, wenn der Schalenwandinnenbereich mehrere Funktionssektoren aufweist, wobei die Landefläche und der Servicebereich in unterschiedlichen der Funktionssektoren angeordnet sind. Die Funktionssektoren können mit einer oder mehreren Sektorwänden, insbesondere räumlich, voneinander getrennt sein. Zweckmäßig ist es, wenn das Luftfahrzeug mit einer Luftfahrzeugtransporteinrichtung, beispielsweise vorgenannter Verschiebeeinrichtung, zwischen unterschiedlichen Funktionssektoren verfahrbar ist. Praktikabel ist es, wenn die Funktionssektoren relativ zur Schalenwand rotierbar sind, um die Funktionssektoren in unterschiedlichen Positionen relativ zur Schalenwand zu positionieren. Zweckmäßig können die Funktionssektoren dabei um eine Rotationsachse quer, insbesondere orthogonal zur Landefläche, rotierbar sein.

Vorteilhaft ist es, wenn die Landestation ein steuerbar bewegliches Dach aufweist, mit welchem die durch die Schalenwand, insbesondere deren oberen Schalenwandrand, gebildete Durchflugsöffnung, durch welche ein Luftfahrzeug für ein Landen in den Schalenwandinnenbereich hindurchfliegen kann, zumindest teilweise, vorzugsweise im Wesentlichen gänzlich, bedeckbar ist. Auf diese Weise kann der Schalenwandinnenbereich, insbesondere die Landefläche, vor Wettereinflüssen, insbesondere Regen, geschützt werden.

Günstig ist es, wenn die Landestation ein Wasserablaufsystem aufweist, um Regenwasser vom Schalenwandinnenbereich, insbesondere von der Landefläche, aus diesem abzuleiten und/oder in einen Wasserspeicher der Landestation zu überführen. Der Wasserspeicher kann zur Speicherung von Löschwasser dienen, beispielsweise um ein Brandlöschsystem mit Löschwasser zu versorgen, zum Beispiel um ein in Brand geratenes Luftfahrzeug zu löschen. Das Wasserablaufsystem kann Wasserableitkanäle aufweisen, um Regenwasser zu sammeln und abzuleiten. Zweckmäßig kann vorgesehen sein, dass die Wasserableitkanäle vom Schalenwandinnenbereich nach außerhalb des Schalenwandinnenbereiches führen. Die Wasserableitkanäle können zumindest abschnittsweise durch die Schalenwand hindurch und/oder zumindest teilweise versenkt in einem den Schalenwandinnenbereich begrenzenden Bodenabschnitt verlaufen. Die Landefläche ist üblicherweise auf dem Bodenabschnitt angeordnet oder mit diesem gebildet. Praktikabel ist es, wenn der Wasserspeicher bzw. das Brandlöschsystem ausgebildet ist, einen Abschnitt des Schalenwandinnenbereiches, insbesondere den Landebereich bzw. die Landefläche, mit Wasser, vorzugsweise bis zu einer vordefinierten Füllhöhe, zu fluten.

Eine Reduzierung einer Schallemission ist umsetzbar, wenn die Schalenwand, insbesondere die Schalenwandinnenfläche, mit einem schallabsorbierenden Absorbermaterial gebildet oder verkleidet ist. Dadurch können von einem landenden bzw. startenden Luftfahrzeug, insbesondere in einer Richtung parallel zur Oberfläche, emittierte Lärmemissionen reduziert werden. Das Absorbermaterial kann mit einer elastischen und/oder porösen Struktur zur Absorption von Schalldruckwellen, welche insbesondere von einem startenden bzw. landenden Luftfahrzeug verursacht werden, gebildet sein. Vorteilhaft ist es, wenn das Absorbermaterial ausgebildet ist, Schallwellen mit einer Wellenlänge größer als 1 kHz, insbesondere zwischen 1 kHz und 20 kHz, bevorzugt zwischen 1 kHz und 10 kHz, zu absorbieren, vorzugsweise einen überwiegenden Anteil deren Schallintensität, und bevorzugt in Wärme umzuwandeln. Dies kann praktikabel umgesetzt sein, indem das Absorbermaterial mit porösem Material ausgebildet ist. Zweckmäßig ist es, wenn die Schalenwand, insbesondere, das Absorbermaterial ausgebildet ist, Schallwellen mit einer Wellenlänge kleiner als 1 kHz zu reflektieren. Diese Schallwellen können über die Schalenwand durch eine Schalenwandöffnung, insbesondere die Durchflugsöffnung, der Schalenwand nach außerhalb der Schalenwand reflektiert werden. Ein Immissions-Schalldruckpegel für eine Umgebung der Schalenwand kann dadurch auf einen Bruchteil eines von der Drohne emittierten Schalldruckpegels reduziert werden. Zweckmäßig ist es, wenn die Schallemissionswerte, insbesondere der Schalldruckpegel, in einem dem Schalenwandinnenbereich an der Schalenwand gegenüberliegenden Schalenwandaußenbereich niedriger sind als die zulässigen Grenzwerte für Industriegebiete, bevorzugt für Wohngebiete. Dies gilt vorzugsweise für einen Bereich im Schalenwandaußenbereich unmittelbar an der Schalenwand. Mit den hier beschriebenen, insbesondere vorgenannten, Maßnahmen ist dies erreichbar.

Praktisch ist es, wenn die Landestation eine Heizeinrichtung aufweist, um den Schalenwandinnenbereich bzw. die Landefläche zu heizen. Die Heizeinrichtung kann mit einem oder mehreren Heizelementen gebildet sein. Diese können an der Schalenwand und/oder Landefläche angeordnet bzw. als Teile dieser ausgebildet sein. Auf diese Weise kann ein effizientes Abtauen von gefrorenem Wasser erreicht werden. Das Heizelement kann beispielsweise mit einer elektrischen Widerstandsheizung, einem oder mehrere Peltierelementen und/oder einem von einem Heizmedium durchströmten Heizungskanal umgesetzt sein. Praktisch ist es, wenn die Heizeinrichtung ausgebildet ist, eine mit dem Strömungsleitelement und/oder Luftführungselement, insbesondere deren Luftleitkanal, geleitetes Fluid zu heizen. Hierzu können eines oder mehrere der Heizelemente an diesen angeordnet sein. Dadurch kann das Fluid beschleunigt werden.

Für eine platzsparende Anordnung von mehreren Landestationen nebeneinander ist es günstig, wenn die Schalenwand der Landestation in einem zur Landefläche parallelen Querschnitt eine im Wesentlichen polygonale Außenkontur aufweist. Dadurch können mehrere Landestationen eng beabstandet nebeneinander angeordnet werden. Beispielsweise kann die Schalenwand eine dreieckige, viereckige, fünfeckige, sechseckige, siebeneckige, achteckige oder andere mehreckige Außenkontur aufweisen. Eine fünfeckige, sechseckige oder achteckige Ausbildung hat sich als besonders praktikabel für eine hohe Robustheit erwiesen. Besonders günstig ist es, wenn alle Seitenlängen der Außenkontur im Wesentlichen gleich lang sind.

Je nach Anwendungszweck kann die Schalenwand mit unterschiedlicher Dimensionierung umgesetzt sein. So kann es günstig sein, wenn in einem Querschnitt parallel zur Landefläche ein Durchmesser der Schalenwand bzw. des Schalenwandinnenbereiches zwischen 1 m und 500 m, insbesondere zwischen 2 m und 100 m, bevorzugt zwischen 3 m und 30 m, beträgt. Für eine hohe Anwendungspraktikabilität ist es günstig, wenn die Schalenwand bzw. der Schalenwandinnenbereich in einem Querschnitt orthogonal zur Landefläche eine Höhe zwischen 2 m und 10 m, insbesondere zwischen 3 m und 5 m, aufweist.

Mit Vorteil ist vorgesehen, dass die Landestation eine Stützstruktur aufweist, welche eine Basisfläche in erhöhter Position trägt, wobei die Landefläche und Schalenwand auf der Basisfläche angeordnet sind. Dadurch ist ein Abstand einer Umgebung zum Schalenwandinnenbereich weiter erhöhbar und Emissionen von der Landestation in eine Umgebung dieser weiter reduzierbar. Praktisch ist es, wenn die Basisfläche eine Fläche zwischen 1 m² bis 5 m² aufweist. Die Stützstruktur kann beispielsweise mit einem Gebäude, Turm, und/oder Pfeiler, insbesondere Brückenpfeiler, gebildet sein. Je nach Anwendungszweck kann die Basisfläche aber auch eine Fläche beispielsweise zwischen 1 m² bis 500 m², insbesondere 2 m² bis 100 m², vorzugsweise 2 m² bis 50 m², aufweisen.

Zweckmäßig kann es sein, wenn die Landestation, insbesondere die Schalenwand, zumindest teilweise, insbesondere im Wesentlichen gänzlich, in einem Unterbau, insbesondere Bodenuntergrund, versenkt angeordnet ist. Praktikabel ist es, wenn eine überwiegende Höhe der Schalenwand im Unterbau bzw. Bodenuntergrund versenkt ist.

Vorteilhaft ist es, wenn die Landestation eine Energieversorgungseinrichtung, insbesondere elektrische Ladestation aufweist, um das Luftfahrzeug mit Energie zu versorgen. Die elektrische Ladestation kann für eine kontaktierende Energieübertragung, beispielsweise durch Verbinden von Ladestecker und korrespondierender Ladesteckeraufnahme, und/oder für eine nicht-kontaktierende Energieübertragung, beispielsweise induktive Energieübertragung, ausgebildet sein.

Günstig ist es, wenn ein Set gebildet mit zumindest einer, insbesondere hier beschriebenen Landestation, und zumindest einer Drohne vorhanden ist, wobei die Drohne ausgebildet ist, insbesondere auf hier beschriebene Weise, auf der Landefläche zu landen bzw. von dieser zu starten, wobei die Drohne von der Schalenwand der Landestation umfasst wird.

Mit Vorteil kann eine Landestationenanordnung vorhanden sein, wobei mehrere Landestationen, insbesondere eine oder mehrere Reihen bildend, nebeneinander angeordnet sind. Dies ermöglicht ein zeitparalleles Abfertigen von bzw. Interagieren mit mehreren Luftfahrzeugen. Luftfahrzeuge können damit auf den Landeflächen von unterschiedlichen der Landestationen, insbesondere zeitparallel, landen bzw. von diesen starten. Unterschiedliche der Landestationen können damit jeweils abgestimmt auf ein Luftfahrzeug, welches jeweils auf deren Landefläche landet bzw. von dieser startet, betrieben werden. Platzsparend ist es, wenn die Landestationen eine oder mehrere Reihen bildend nebeneinander angeordnet sind. Zweckmäßig können mehrere Reihen von Landestationen, insbesondere parallel zueinander ausgerichtet, in einer Richtung quer, insbesondere orthogonal, zu einer Reihenlängsrichtung einer der Reihen, nebeneinander angeordnet sein.

Die Landestation bzw. Landestationenanordnung kann auf einem Gebäude oder einem Fahrzeug, beispielsweise einem Landfahrzeug, Luftfahrzeug oder Wasserfahrzeug, angeordnet bzw. als Teil eines solchen ausgebildet sein. Vorteilhaft ist es, wenn die Landestation mobil ist, sodass die Landestation auf einem Untergrund verfahrbar ist. Die Landestation kann einen Antrieb aufweisen, mit welchem die Landestation auf einem Untergrund verfahrbar ist.

Das weitere Ziel wird erfindungsgemäß dadurch gelöst, dass bei einem Interaktionsverfahren der eingangs genannten Art die Landefläche von einer quer zur Landefläche ausgerichteten Schalenwand eingekesselt ist, wobei das startenden bzw. landende Luftfahrzeug von der Schalenwand umfasst wird. Dies ermöglicht es, - wie vorstehend ausgeführt - vom Luftfahrzeug emittierte Emissionen, wie insbesondere Lärm und/oder Lichtabstrahlung, insbesondere in einer Richtung parallel zur Landefläche zu reduzieren. Fluid- bzw. Luftströmungen, welche vom Luftfahrzeug, insbesondere dessen Antrieb, verursacht werden, können mit der Schalenwand effizient umgelenkt werden und eine unkontrollierte Ausbreitung dieser in eine Umgebung, insbesondere in einer Richtung parallel zur Landefläche, unterbunden werden. Praktikabel ist es, wenn dabei das Luftfahrzeug in einer auf der Landefläche befindlichen Landeposition von der Schalenwand ringförmig umfasst wird. Das Luftfahrzeug wird dabei vorzugsweise entlang einer gesamten Höhe des Luftfahrzeuges von der Schalenwand umfasst.

Es versteht sich, dass das Interaktionsverfahren entsprechend bzw. analog den Merkmalen, Vorteilen und Wirkungen, welche im Rahmen der Landestation, insbesondere vorstehend, beschrieben sind, ausgebildet sein kann. Dies gilt analog auch in umgekehrter Richtung.

Vorteilhaft ist es, wenn für ein Landen oder Starten, insbesondere während eines Landens oder Startens, des Luftfahrzeuges die Schalenwand, insbesondere Schalenwandsegmente der Schalenwand, derart gesteuert bewegt wird bzw. werden und/oder steuerbar größenvariierbar ist bzw. sind, dass ein von der Schalenwand umfasster Schalenwandinnenbereich größenveränderbar ist. Vorzugsweise ist vorgesehen, dass in einem zur Landefläche im Wesentlichen parallelen Querschnitt eine von der Schalenwand begrenzte Querschnittsfläche größenvariiert wird. Dadurch kann der Schalenwandinnenbereich bzw. die Querschnittsfläche an das Luftfahrzeug, insbesondere dessen Flugkurs, angepasst werden. Eine Kollisionsgefahr kann damit reduziert werden. Im Besonderen kann auf diese Weise eine vom Luftfahrzeug verursachter Fluidimpuls, insbesondere Fluidströmung, meist Luftströmung, je nach Luftfahrzeug und/oder dessen Position bzw. Geschwindigkeit unterschiedlich mit der Schalenwand umgelenkt werden, vorzugsweise um einen jeweiligen Flugzustand des Luftfahrzeuges zu unterstützen.

Bevorzugt ist vorgesehen, dass sich das Luftfahrzeug in einer auf der Landefläche befindlichen Landeposition im Wesentlichen gänzlich in dem von der Schalenwand definierten Schalenwandinnenbereich befindet. Die Schalenwand ist in der Regel derart ausgebildet, dass diese, insbesondere in Draufsicht auf die Landefläche, die Landefläche bzw. ein im Zentrum der Landefläche befindliches Luftfahrzeug im Wesentlichen gänzlich umfasst. Damit ist umsetzbar, dass im Schalenwandinnenbereich von einer Mitte der Landefläche ausgehende Emissionen im Wesentlichen in sämtlichen radialen Richtungen parallel zur Landefläche auf die Schalenwand treffen.

Zur Fluidimpulsleitung ist es günstig, wenn während eines Startens und/oder Landens des Luftfahrzeuges ein Durchfluss eines Fluidimpulses, wie einer Luftströmung, insbesondere eines vom Luftfahrzeug verursachten Fluidimpulses durch zumindest eine Durchströmöffnung der Schalenwand gesteuert wird, insbesondere die Durchströmöffnung gesteuert geöffnet bzw. geschlossen wird. Der Fluidimpuls ist üblicherweise eine Fluiddruckwelle und/oder Fluidströmung, insbesondere Luftströmung. Dadurch kann ein Fluidimpulsausbreitungsverhalten, insbesondere Fluidströmungsverhalten, im Schalenwandinnenbereich beeinflusst werden, um ein Flugverhalten, des Luftfahrzeuges zu stützen, insbesondere zu unterstützen. Günstig ist es, wenn die Durchströmöffnung dabei gesteuert größenvariiert wird.

Es hat sich bewährt, wenn während des Startens, insbesondere Abhebens, und/oder Landens, insbesondere Abhebens, des Luftfahrzeuges in einem ersten Schritt zumindest eine Durchströmöffnung der Schalenwand geöffnet ist, um durch das Luftfahrzeug verursachte Fluidimpulse, insbesondere Fluiddruckwellen und/oder Fluidströmungen, vom von der Schalenwand umfassten Schalenwandinnenbereich über die Durchströmöffnung durch die Schalenwand hindurch zu leiten und vorzugsweise anschließend in einem zweiten Schritt die zumindest eine Durchströmöffnung geschlossen wird, um einen Fluidimpulsdruck, insbesondere Fluidstau, unter dem Luftfahrzeug zu erzeugen. Der Fluidstau ist üblicherweise ein Luftstau. Dadurch kann praktikabel ein Bewegungsverhalten des Flugzeuges gestützt, insbesondere unterstützt, werden. Wenn im ersten Schritt Fluidimpulse bzw. Fluidströmungen, insbesondere Luftströmungen, über die Durchströmöffnung vom Schalenwandinnenbereich abgeleitet werden, können unerwünschte Turbulenzen, welche beispielsweise infolge von Reflexionen von Fluid bzw. Luftströmungen an Schalenwand und/oder Landefläche gebildet werden minimiert, insbesondere verhindert werden. Wenn im zweiten Schritt, beispielsweise im Zuge eines Aufsetzens oder Abhebens des Luftfahrzeuges auf bzw. von der Landefläche, ein Fluidimpulsdruck bzw. Fluidstau unter dem Luftfahrzeug erzeugt wird, kann mit dem Fluidimpulsdruck bzw. Fluidstau eine das Luftfahrzeug stabilisierende und unterstützende Kraftwirkung erzeugt werden. Es hat sich gezeigt, dass damit ein Energieverbrauch eines Luftfahrzeuges im Rahmen eines Startvorgangs des Luftfahrzeuges, im Besonderen in einem Nahbereich der Landefläche, um mehr als 10 % reduzierbar ist, beispielsweise bei einer Drohne mit einem Startgewicht von 600 kg, wobei eine Energieeinsparung mit abnehmendem Startgewicht üblicherweise weiter zunimmt. Insbesondere hat sich herausgestellt, dass durch die Kombination von Umfassung mit der Schalenwand und Durchströmöffnungen in der Schalenwand beim Starten des Luftfahrzeuges von der Landefläche weggerichtete das Luftfahrzeug kraftbeaufschlagende Luftimpulse erzeugt werden können, welche mehr als 50 %, abhängig vom Luftfahrzeuggewicht häufig mehr als 100 %, eines erforderlichen vom Luftfahrzeug bzw. dessen Antrieb zu erzeugenden Luftimpulses aufweisen.

Günstig ist es, wenn während eines Startens, insbesondere Abhebens, und/oder Landens, insbesondere Aufsetzen, des Luftfahrzeuges mit einer Strömungserzeugungseinrichtung der Landestation ein Fluidimpuls, bevorzugt eine Luftströmung, erzeugt wird, welcher das Luftfahrzeug mit einer Kraft beaufschlagt. Der Fluidimpuls ist üblicherweise eine Fluiddruckwelle und/oder Fluidströmung. Dadurch kann das Flugverhalten des Luftfahrzeuges beeinflusst werden. Der Fluidimpuls, insbesondere die Fluidströmung, wird üblicherweise mit einer Richtung dieses quer, insbesondere orthogonal, zur Landefläche von der Landefläche wegweisend erzeugt. Insbesondere kann der Fluidimpuls genutzt werden, um das Luftfahrzeug während eines Startens, insbesondere Abhebens von der Landefläche, zu beschleunigen oder während eines Landens, insbesondere Aufsetzens auf die Landefläche, abzubremsen. Die Fluidströmung ist üblicherweise eine Gasströmung, insbesondere Luftströmung. Die Strömungserzeugungseinrichtung ist zur Erzeugung des Fluidimpulses, insbesondere der Fluidströmung, in der Regel mit zumindest einer Ventilatoreinheit gebildet. Günstig ist es, wenn die Strömungserzeugungseinrichtung zur Erzeugung des Fluidimpulses eine Turbine, insbesondere eine Mantelstromturbine, aufweist. Diese kann mit einem Verbrennungsprozess oder Elektroantrieb betreibbar sein. Zweckmäßig kann dabei ein, meist heißes, Turbinengas mit einem kalten Mantelfluidstrom vermischt werden, um einen Fluidvolumenstrom zu vergrößern. Alternativ oder kumulativ kann die Strömungserzeugungseinrichtung mit einem Elektromotor betrieben sein, welcher vorzugsweise mit einer Akkumulatoreinheit mit Energie versorgt wird. Praktikabel ist es, wenn die Strömungserzeugungseinrichtung, insbesondere Turbine, ausgebildet ist, einen Fluidstrom mit Überschallgeschwindigkeit zu erzeugen. Zweckmäßig kann dieser genutzt werden, um das Luftfahrzeug zu beschleunigen, insbesondere wegzukatapultieren. Günstig ist es, wenn die Strömungserzeugungseinrichtung einen Fluidspeicher zur Speicherung von verdichtetem Fluid, insbesondere Gas, wie Luft, aufweist, um das Luftfahrzeug durch, insbesondere schnelle, Entweichung des Fluids mit einem Impuls bzw. einer Kraft zu beaufschlagen. Der Fluidspeicher kann hierzu eine steuerbar öffenbare Austrittsöffnung aufweisen. Die Strömungserzeugungseinrichtung kann zumindest teilweise, insbesondere im Wesentlichen gänzlich, unter der Landefläche angeordnet sein. Es kann zweckmäßig sein, wenn die Strömungserzeugungseinrichtung neben der Landefläche angeordnet ist. Ist die Strömungserzeugungseinrichtung unter der Landefläche angeordnet, ist es günstig, wenn die Landefläche zumindest teilweise fluidströmungsdurchlässig ausgebildet ist, um den von der Fluidströmungseinrichtung erzeugten Fluidimpuls durch die Landefläche hindurchzuleiten. Hierzu kann die Landefläche beispielsweise eine oder mehrere Fluidströmungsdurchlassöffnungen aufweisen. Praktikabel kann die Landestation mehrere Strömungserzeugungseinrichtungen aufweisen. Vorteilhaft kann vorgesehen sein, dass das Luftfahrzeug im Wesentlichen ohne eigene Antriebsenergie auf der Landefläche landet bzw. von dieser startet.

Zur Lärmreduktion ist es günstig, wenn die Landestation eine Gegenschalleinrichtung aufweist, mit welcher während eines Startens und/oder Landens des Luftfahrzeuges ein Gegenschallgeräusch erzeugt wird, um durch Interferenzbildung von Gegenschallgeräusch und eines vom Luftfahrzeug emittierten Luftfahrzeuggeräusches das Luftfahrzeuggeräusch zu dämpfen. Zweckmäßig kann ein Geräuschsensor zur Erfassung von Luftfahrzeuggeräuschen vorgesehen sein, um die Gegenschalleinrichtung abhängig von den mit dem Geräuschsensor erfassten Luftfahrzeuggeräuschen zu steuern, insbesondere zu regeln. Die Landestation kann mehrere Gegenschalleinrichtungen aufweisen. Zweckmäßig kann die Landestation einen oder mehrere solche Geräuschsensoren aufweisen. Verschiedene Geräuschsensoren können unterschiedlichen Gegenschalleinrichtungen zugeordnet sein.

Praktikabel ist es, wenn die Landefläche mit einem Katapult ausgefahren wird, um das Luftfahrzeug mit der Landefläche von der Landefläche wegzustoßen. Dadurch kann ein Startvorgang des Luftfahrzeuges, insbesondere dessen Abheben von der Landefläche, zeiteffizient durchgeführt werden. Das Katapult kann mit einem, insbesondere teleskopartig, ausfahrbaren Stoßelement gebildet sein, um mit Verfahren des Stoßelementes die Landefläche zu bewegen. Ein Ausfahren des Stoßelementes kann mechanisch und/oder elektrisch und/oder fluidtechnisch, insbesondere hydraulisch und/oder pneumatisch, und/oder elektromagnetisch erfolgen. Die Landefläche ist in der Regel mechanisch mit dem Stoßelement verbunden, sodass eine solche Bewegungsübertragung durchführbar ist. Zweckdienlich ist es, wenn das Stoßelement unterhalb der Landefläche angeordnet ist, beispielsweise die Landefläche auf dem Stoßelement aufliegt. Es hat sich bewährt, wenn das Stoßelement mit mehreren teleskopartig ausfahrbaren Stoßelementsegmenten gebildet ist. Das Katapult kann derart ausgebildet sein, dass jeweils ein Stoßelementsegment steuerbar ausfahrbar relativ zu einem diesen unmittelbar benachbarten Stoßelementsegment ist. Günstig ist es, wenn dabei die einzelnen Stoßelementsegmente separat voneinander steuerbar ausfahrbar sind, insbesondere relativ zum jeweiligen unmittelbar benachbarten Stoßelement.

Die Begriffe ober bzw. oberhalb bzw. über sowie unter bzw. unterhalb der Landefläche bezeichnen relative Positionsangaben in Bezug auf einen die Landefläche bildenden Landeboden, wobei ober bzw. oberhalb bzw. über eine Seite des Landebodens bzw. einen von dieser Seite begrenzten Bereich bezeichnet, welchem die Landefläche zugewandt ist und unter bzw. unterhalb eine Seite des Landebodens bzw. einen von dieser Seite begrenzten Bereich bezeichnet, welchem die Landefläche abgewandt ist. Der Begriff Höhe bezeichnet üblicherweise eine relative Positionsangabe in Bezug auf die Landefläche bzw. einen diese bildenden Landeboden bzw. einen Boden oder Untergrund, auf welchem die Landefläche angeordnet ist, wobei die Höhe in einer Richtung, üblicherweise orthogonal zur Landefläche, von der Landefläche wegweisend gemessen wird.

Weitere Merkmale, Vorteile und Wirkungen ergeben sich aus den nachfolgend dargestellten Ausführungsbeispielen. In den Zeichnungen, auf welche dabei Bezug genommen wird, zeigen:
Fig. 1 eine Landestation mit einer Landefläche und einer Schalenwand, wobei die Schalenwand die Landefläche bzw. ein startendes bzw. landendes Luftfahrzeug mit der Schalenwand umfasst;
Fig. 2 eine Draufsicht auf die Landestation der Fig. 1;
Fig. 3 eine weitere Ausführung der Landestation der Fig. 1 in einer Draufsicht;
Fig. 4 eine weitere Landestation mit einer absenkbaren Landefläche;
Fig. 5 die Landestation der Fig. 4 mit abgesenkter Landefläche;
Fig. 6 eine Landestation mit zu einem Dach verschwenkbaren Schalenwandsegmenten der Schalenwand;
Fig. 7 eine Landestation mit Durchströmöffnungen in deren Schalenwand;
Fig. 8 die Landestation der Fig. 7 mit geschlossenen Durchströmöffnungen;
Fig. 9 eine Landestation mit einer Strömungserzeugungseinrichtung.

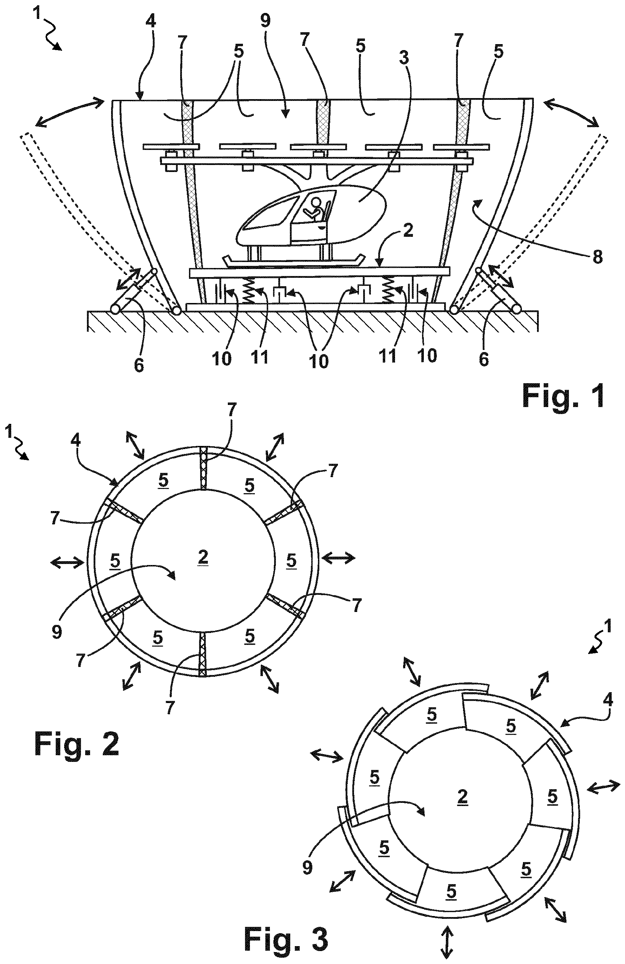

Fig. 1 zeigt eine schematische Darstellung einer Landestation 1 für ein Luftfahrzeug 3, insbesondere ein VTOL-Luftfahrzeug, in einem Querschnitt, aufweisend eine Landefläche 2 zum Landen bzw. Starten des Luftfahrzeuges 3, wobei die Landefläche 2 von einer quer zur Landefläche 2 ausgerichteten Schalenwand 4 eingekesselt ist, um das Luftfahrzeug 3 beim Starten bzw. Landen mit der Schalenwand 4 zu umfassen. Indem das startende bzw. landende Luftfahrzeug 3 bzw. ein Landebereich des Luftfahrzeuges 3 von der Schalenwand 4, insbesondere ringartig, umfasst wird, können Lärmemissionen und/oder Lichtemissionen des Luftfahrzeuges 3 in eine Umgebung mit der Schalenwand 4 minimiert werden. Zweckmäßig kann mit einer im Wesentlichen gänzlichen Umfassung des Luftfahrzeuges 3 mit der Schalenwand 4 eine vom Luftfahrzeug 3 verursachte Fluid- bzw. Luftströmung L vorteilhaft beeinflusst bzw. umgeleitet werden.

Die Schalenwand 4 ist mit mehreren steuerbar kippbaren Schalenwandsegmenten 5 gebildet, um einen von der Schalenwand 4 umfassten Schalenwandinnenbereich 9 größenzuverändern. Das Luftfahrzeug 3 befindet sich bei einem Starten, insbesondere Abheben, bzw. Landen, insbesondere Aufsetzen, des Luftfahrzeuges 3 von bzw. auf der Landefläche 2 üblicherweise innerhalb des Schalenwandinnenbereiches 9. Durch Kippen der Schalenwandsegmente 5 relativ zur Landefläche 2, wobei üblicherweise ein Neigungswinkel der Schalenwandsegmente 5 relativ zur Landefläche 2 variiert wird, kann der Schalenwandinnenbereich 9 an eine Größe, Position und/oder geplanten Kurs des Luftfahrzeuges 3 angepasst werden. Mit unterschiedlichen Bewegungszuständen, insbesondere Kippzuständen, der Schalenwand 4 bzw. Schalenwandsegmente 5 kann Einfluss auf eine vom Luftfahrzeug 3 verursachte Luftströmung L genommen werden, wenn je nach Bewegungszustand die Luftströmung L unterschiedlich umgelenkt wird.

Die Schalenwandsegmente 5 werden üblicherweise jeweils um zumindest eine, meist im Wesentlichen parallel zur Landefläche 2 ausgerichtete, Kippachse gekippt. Dadurch ist eine abgestimmte Emissionsreduzierung durch die Schalenwand 4 umsetzbar. Zweckmäßig ist es, wenn die Schalenwandsegmente 5 unabhängig bzw. separat voneinander ansteuerbar sind. Praktikabel können ein oder mehrere als steuerbare Aktuatoren ausgebildete steuerbar längenveränderliche Aktuatorstangen 6 vorhanden sein, um die Schalenwandsegmente 5 zu kippen. Um in unterschiedlichen Kippzuständen, insbesondere während eines Kippens, der Schalenwandsegmente 5 eine im Wesentlichen gänzliche Umfassung des Schalenwandinnenbereiches 9 zu gewährleisten, ist vorgesehen, dass die Schalenwandinnenfläche 8 größenveränderbar ausgebildet ist. Dies kann, wie in Fig. 1 dargestellt, mit zwischen den Schalenwandsegmenten 5 angeordneten, insbesondere elastisch, verformbaren Zwischensegmentelementen 7 umgesetzt sein, sodass bei einem Bewegen bzw. Kippen der Schalenwandsegmente 5 zur Größenanpassung der Schalenwandinnenfläche 8 die Zwischensegmentelemente 7 verformt werden. Alternativ oder kumulativ kann auch eine andere Variante einer Anpassung der Schalenwandinnenfläche 8 vorhanden sein, beispielsweise teleskopartig ineinander verschiebbare und/oder einander überlappende Schalenwandsegmente 5, wie beispielsweise in Fig. 3 dargestellt. Zweckmäßig kann die Landefläche 2 mit Dämpfungselementen 10 und Federelementen 11 gedämpft schwingungsfähig gelagert sein.

Fig. 2 zeigt eine schematische Darstellung der Landstation 1 der Fig. 1 in Draufsicht auf die Landefläche 2. Wie in Fig. 2 dargestellt, ist es günstig, wenn die Schalenwandinnenfläche 8 im Wesentlichen eckenfrei ausgebildet ist. Dies gilt insbesondere in einem Querschnitt parallel zur Landefläche 2 bzw. in der Draufsicht. Dies kann umgesetzt sein, indem die Schalenwand 4 im Querschnitt bzw. in Draufsicht im Wesentlichen ellipsenförmig oder kreisförmig ausgebildet ist. Durch Verkippen der Schalenwandsegmente 5 kann vorteilhaft eine Flächenquerschnittsfläche der Schalenwand 4 variiert werden. Günstig ist es, wenn wie in Fig. 1 bzw. Fig. 2 vorgesehen die Schalenwandinnenfläche 8 überwiegend, bevorzugt im Wesentlichen gänzlich, als Rotationfläche ausgebildet ist. Fig. 3 zeigt eine schematische Darstellung einer weiteren Ausführungsvariante der Landestation 1 der Fig. 1 in Draufsicht auf die Landefläche 2. Die Landestation 1 ist entsprechend der Landestation der Fig. 1 ausgebildet, wobei unmittelbar benachbarte Schalenwandsegmente 5 nicht mit verformbaren Zwischensegmentelementen 7, sondern einander überlappend ausgebildet sind. Auf diese Weise kann in unterschiedlichen Kippzuständen, insbesondere während eines Kippens, der Schalenwandsegmente 5 eine im Wesentlichen gänzliche Umfassung des Schalenwandinnenbereiches 9 gewährleistet werden.

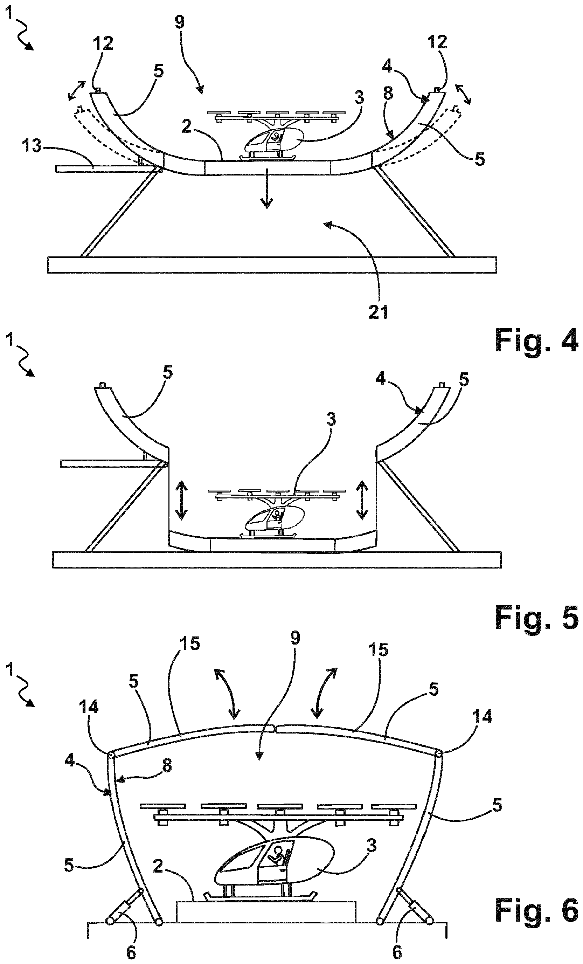

Fig. 4 zeigt eine schematische Darstellung einer weiteren Landestation 1 für ein Luftfahrzeug 3, insbesondere VTOL-Luftfahrzeug 3, in einem Querschnitt. Die Landestation 1 kann analog zu jener im Rahmen der Fig.1 bis Fig. 3 erläuterten Landestation 1 ausgebildet sein, und umgekehrt. Die Landestation 1 weist eine quer zur Landefläche 2 ausgerichtete Schalenwand 4 auf. Zur Luftströmungsleitung ist es günstig, wenn die Landefläche 2 im Wesentlichen stufenlos bzw. stetig in die Schalenwand 4 übergeht. Praktisch ist es, wenn die Landefläche 2 steuerbar absenkbar ausgebildet ist, um ein auf der Landefläche 2 befindliches Luftfahrzeug 3 vom Schalenwandinnenbereich 9 in einen Servicebereich 21 zu verfahren. Zweckmäßig kann die Landestation 1 mehrere Etagen aufweisen, wobei der Schalenwandinnenbereich 9 in einer ersten Etage angeordnet ist, und der Servicebereich 21 in einer zweiten Etage, welche sich vorzugsweise unter der ersten Etage befindet. Fig. 5 zeigt eine schematische Darstellung der Landestation 1 der Fig. 4, wobei die Landefläche 2 in den Servicebereich 21 abgesenkt ist. Die Landestation 1 kann ein oder mehrere Signalisierungselemente 12, beispielsweise Lichtemissionselemente, aufweisen, welche von einem sich der Landestation 1 nähernden Luftfahrzeug 3 erkennbar sind, um mit den Signalisierungselementen 12 anzugeben, ob die Landestation 1 bzw. deren Landefläche 2 für die Aufnahme eines Luftfahrzeuges 3 bereit ist. Üblicherweise ist außerdem ein Personenzugang 13 zum Schalenwandinnenbereich 9 durch die Schalenwand 4 hindurch, beispielsweise über verschließbare Türöffnungen, ermöglicht.

Fig. 6 zeigt eine schematische Darstellung einer Landestation 1 für Luftfahrzeug 3, insbesondere VTOL-Luftfahrzeug 3, in einem Querschnitt, wobei deren Schalenwand 4 mit mehreren miteinander verbundenen Schalenwandsegmenten 5 gebildet ist. Die Landestation 1 kann analog zu jenen im Rahmen der Fig.1 bis Fig. 5 erläuterten Landestationen 1 ausgebildet sein, und umgekehrt. Zweckmäßig sind mehrere Schalenwandsegmente 5 relativ zueinander steuerbar verschwenkbar miteinander verbunden. Hierzu können die Schalenwandsegmente 5 mit Gelenken 14 miteinander verbunden sein. Praktikabel ist es, wenn ein oder mehrere erste Schalenwandsegmente 5 derart relativ zu anderen Schalenwandsegmenten 5 verschwenkbar sind, dass die ersten Schalenwandsegmente 5 ein Dach bilden, um ein auf der Landefläche 2 befindliches Luftfahrzeug 3 vor Regen zu schützen. Zweckmäßig ist es, wenn die ersten Schalenwandsegmente 5 derart steuerbar verschwenkbar sind, dass eine mit einem Schalenwandrand der Schalenwand 4 gebildete Durchflugsöffnung im Wesentlichen vollständig verschlossen wird.

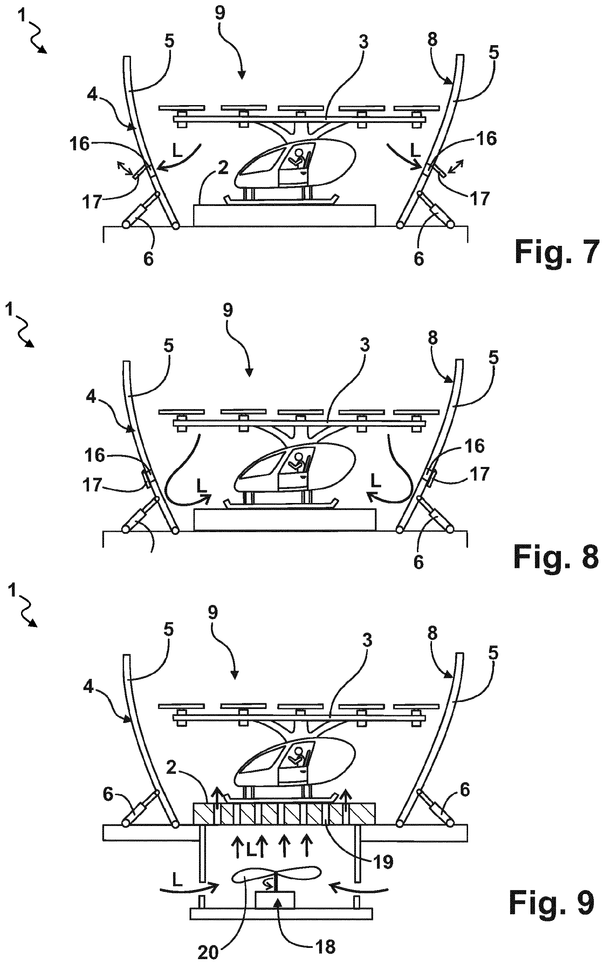

Fig. 7 zeigt eine schematische Darstellung einer Landestation 1 für ein Luftfahrzeug 3, insbesondere VTOL-Luftfahrzeug 3, in einem Querschnitt, wobei die Schalenwand 4 ein oder mehrere durchflusssteuerbare Durchströmöffnungen 16 aufweist, um einen Durchfluss einer Luftströmung L durch die Schalenwand 4 hindurch zu steuern, insbesondere zu regeln. Die Landestation 1 kann analog zu jenen im Rahmen der Fig.1 bis Fig. 6 erläuterten Landestationen 1 ausgebildet sein, und umgekehrt. Zweckmäßig können die Durchströmöffnungen 16 mit steuerbaren Durchströmöffnungsklappen 17 verschließbar sein. Wie in Fig. 7 dargestellt, kann dadurch bei geöffneten Durchströmöffnungen 16 eine von einem startenden bzw. landenden Luftfahrzeug 3 verursachte Luftströmung L über die Durchströmöffnungen 16 vom Schalenwandinnenbereich 9 nach außerhalb der Schalenwand 4 abgeleitet werden. Damit kann ein laminarer Strömungsfluss im Schalenwandinnenbereich 9 unterstützt bzw. erreicht werden. Günstig ist es, wenn während eines Startens bzw. Landens des Luftfahrzeuges 3 in einem ersten Schritt die Durchströmöffnungen 16 geöffnet sind, um eine vom Luftfahrzeug 3 verursachte Luftströmung L über die Durchströmöffnungen 16 vom Schalenwandinnenbereich 9 nach außen zu leiten, dargestellt in Fig. 7, und anschließend in einem zweiten Schritt die Durchströmöffnungen 16 geschlossen werden, um einen Luftstau unter dem Luftfahrzeug 3 zu erzeugen, dargestellt in Fig. 8. Auf diese Weise kann ein auf das Luftfahrzeug 3 kraftwirkender Luftimpuls erzeugt werden, welcher von der Landefläche 2 weggerichtet ist, um eine Bewegung des Luftfahrzeuges 3 zu stützen. Dadurch kann ein Energieverbrauch des Luftfahrzeuges 3 beim Landen bzw. Starten reduziert werden.

Fig. 9 zeigt eine schematische Darstellung einer Landestation 1 für ein Luftfahrzeug 3, insbesondere VTOL-Luftfahrzeug 3, in einem Querschnitt, wobei eine Strömungserzeugungseinrichtung 18 unterhalb der Landefläche 2 angeordnet ist, um mit der Strömungserzeugungseinrichtung 18 eine Fluidströmung, insbesondere Luftströmung L, zu erzeugen, welche ein startendes bzw. landendes Luftfahrzeug 3 mit einer Kraft beaufschlagt. Die Landestation 1 kann analog zu jenen im Rahmen der Fig.1 bis Fig. 8 erläuterten Landestationen 1 ausgebildet sein, und umgekehrt. Die Landefläche 2 kann mit einer oder mehreren Fluidströmungsdurchlassöffnungen 19 umgesetzt sein, um die Fluidströmung durch die Landefläche 2 zu leiten. Die Strömungserzeugungseinrichtung 18 kann beispielsweise mit einer oder mehreren Ventilatoreinheiten 20 gebildet sein, um die Fluidströmung zu erzeugen. Praktikabel ist bevorzugt vorgesehen, dass mit der Ventilatoreinheit 20 Luft von außerhalb des Schalenwandinnenbereiches 9 dem Schalenwandinnenbereich 9 zugeführt und in Richtung des Luftfahrzeuges 3 beschleunigt wird. Durch die Kombination von Schalenwand 4 und mit der Strömungserzeugungseinrichtung 18 erzeugter Fluidströmung kann eine besonders effizient wirkende Kraftbeaufschlagung des Luftfahrzeuges 3 mit der Fluidströmung erreicht werden. Dies gilt besonders, wenn die Schalenwand 4 zusätzlich verschließbare Durchströmöffnungen 16, wie im Rahmen der Fig. 7 bzw. Fig. 8 erläutert, aufweist.

Es versteht sich, dass die in Fig. 4 bis Fig. 9 dargestellten Ausführungsvarianten einer Landestation 1 jeweils unterschiedliche, insbesondere miteinander kombinierbare, funktionelle Ausgestaltungsmöglichkeiten der Landestation 1 zeigen. Die Landestationen 1 der Fig. 4 bis Fig. 9 sind üblicherweise entsprechend der in Fig. 1 bis Fig. 3 gezeigten Landestation 1 mit einer quer zur Landefläche 2 ausgerichteten Schalenwand 4 gebildet, welche die Landefläche 2 einkesselt. Zweckmäßig ist die Schalenwand 4 in der Regel dabei wie unter Fig. 1 bis Fig. 3 beschrieben mit steuerbar kippbaren Schalenwandsegmenten 5 gebildet, wobei üblicherweise in unterschiedlichen Kippzuständen, insbesondere während eines Kippens, der Schalenwandsegmente 5 eine im Wesentlichen gänzliche Umfassung des Schalenwandinnenbereiches 9 mit der Schalenwand gewährleistet ist.

Wenn eine Landestation 1 für ein Luftfahrzeug 3, von einer quer zur Landefläche 2 ausgerichteten Schalenwand 4 eingekesselt ist, um ein startendes bzw. landendes Luftfahrzeug 3 mit der Schalenwand 4 gänzlich zu umfassen, können Lärmemissionen und/oder Lichtemissionen des Luftfahrzeuges 3 in eine Umgebung minimiert werden. Die Schalenwand 4 bildet dabei üblicherweise einen ringartigen Umbau, um ein startendes bzw. landendes Luftfahrzeug 3 bzw. einen hierfür vorgesehenen Landebereich auf der Landefläche 2 mit der Schalenwand 4 zu umfassen. Dies ermöglicht es insbesondere Luftströmungen L, welche vom Luftfahrzeug 3 erzeugt werden, zu beeinflussen bzw. kontrolliert umzulenken. Wenn der Landebereich bzw. das Luftfahrzeug 3 schüsselartig umfasst werden, sind definierte Randbedingungen zur Erzeugung eines vorteilhaften Strömungsflusses innerhalb des Schalenwandinnenbereiches 9 erreichbar. Wenn die Schalenwand 4, insbesondere deren Schalenwandsegmente 5, steuerbar bewegbar, insbesondere kippbar, sind, kann eine Emissionsreduzierung und/oder Luftströmungsleitung erreicht werden. Durch Vorsehen von steuerbaren Durchströmöffnungen 16 in der Schalenwand 4 kann ein Strömungsfluss innerhalb des Schalenwandbereiches besonders effizient beeinflusst bzw. umgelenkt werden, wodurch Luftströmungen L zur Unterstützung und insbesondere Kraftbeaufschlagung des Luftfahrzeuges 3 umgeleitet werden können, wodurch ein Energieverbrauch des Luftfahrzeuges 3 reduzierbar ist.

## Patentansprüche

1. Landestation (1) für ein Luftfahrzeug (3), insbesondere ein vertikal startendes Luftfahrzeug (3) (VTOL), wie eine Drohne, aufweisend eine Landefläche (2) zum Landen bzw. Starten des Luftfahrzeuges (3), **dadurch gekennzeichnet, dass** die Landefläche (2) von einer quer zur Landefläche (2) ausgerichteten Schalenwand (4) eingekesselt ist, um das startende bzw. landende Luftfahrzeug (3) mit der Schalenwand (4) zu umfassen.

2. Landestation (1) nach Anspruch 1, **dadurch gekennzeichnet, dass** die Schalenwand (4) derart steuerbar bewegbar und/oder steuerbar größenvariierbar ist, dass ein von der Schalenwand (4) umfasster Schalenwandinnenbereich (9) größenveränderbar ist.

3. Landestation (1) nach Anspruch 1 oder 2, **dadurch gekennzeichnet, dass** die Schalenwand (4) mit mehreren Schalenwandsegmenten (5) gebildet ist, wobei die Schalenwandsegmente (5) derart steuerbar bewegbar sind, dass eine Neigung der Schalenwandsegmente (5) relativ zur Landefläche (2), insbesondere unabhängig voneinander, variierbar ist, um einen von der Schalenwand (4) umfassten Schalenwandinnenbereich (9) größenzuverändern.

4. Landestation (1) nach einem der Ansprüche 2 oder 3, **dadurch gekennzeichnet, dass** eine der Landefläche (2) zugewandte Schalenwandinnenfläche (8) der Schalenwand (4) größenveränderbar ist, um die Schalenwandinnenfläche (8) an eine durch ein Bewegen der Schalenwand (4), insbesondere Schalenwandsegmente (5), geänderte Größe des Schalenwandinnenbereiches (9) anzupassen.

5. Landestation (1) nach Anspruch 3 und 4, **dadurch gekennzeichnet, dass** die Schalenwandsegmente (5) miteinander verbunden sind, indem zwischen den Schalenwandsegmenten (5), insbesondere elastisch, verformbare Zwischensegmentelemente (7) angeordnet sind, sodass bei einem Bewegen, insbesondere Verkippen, der Schalenwandsegmente (5) die Zwischensegmentelemente (7) verformt werden, um die Schalenwandinnenfläche (8) größenzuverändern.

6. Landestation (1) nach einem der Ansprüche 1 bis 5, **dadurch gekennzeichnet, dass** die Schalenwand (4) eine oder mehrere durchflusssteuerbare Durchströmöffnungen (16) aufweist, um einen Durchfluss eines Fluidimpulses, insbesondere einer Fluiddruckwelle und/oder Fluidströmung, etwa Luftströmung (L), vom Schalenwandinnenbereich (9) über die Durchströmöffnungen (16) durch die Schalenwand (4) hindurch zu steuern, insbesondere zu regeln.

7. Landestation (1) nach einem der Ansprüche 1 bis 6, **dadurch gekennzeichnet, dass** die Landestation ein oder mehrere Strömungsleitelemente aufweist, um einen von einem startenden bzw. landenden Luftfahrzeug erzeugten zur Landefläche hin gerichteten Fluidimpuls, insbesondere Luftströmung, mit den Strömungsleitelementen in Richtung zur Schalenwand, bevorzugt im Wesentlichen parallel zur Landefläche, umzulenken.

8. Landestation (1) nach einem der Ansprüche 1 bis 7, **dadurch gekennzeichnet, dass** die Landefläche (2) mit einer Verschiebeeinrichtung steuerbar verfahrbar, insbesondere absenkbar ist, um ein auf der Landefläche (2) befindliches Luftfahrzeug (3) von einer Landeposition in einen Servicebereich (21) zu überführen, bevorzugt abzusenken.

9. Landestationenanordnung, **dadurch gekennzeichnet, dass** mehrere Landestationen (1) nach einem der Ansprüche 1 bis 8, insbesondere eine oder mehrere Reihen bildend, nebeneinander angeordnet sind.

10. Interaktionsverfahren einer Landestation (1), insbesondere einer Landestation (1) nach einem der Ansprüche 1 bis 9, mit einem Luftfahrzeug (3), insbesondere einem vertikal startenden Luftfahrzeug (3) (VTOL), wie einer Drohne, wobei das Luftfahrzeug (3) von einer Landefläche (2) der Landestation (1) startet bzw. auf dieser landet, **dadurch gekennzeichnet, dass** die Landefläche (2) von einer quer zur Landefläche (2) ausgerichteten Schalenwand (4) eingekesselt ist, wobei das startende bzw. landende Luftfahrzeug (3) von der Schalenwand (4) umfasst wird.

11. Interaktionsverfahren nach Anspruch 10, **dadurch gekennzeichnet, dass** während eines Startens und/oder Landens des Luftfahrzeuges (3) ein Durchfluss eines Fluidimpulses, etwa einer Luftströmung (L), insbesondere einer vom Luftfahrzeug (3) verursachten Luftströmung (L), durch zumindest eine Durchströmöffnung (16) der Schalenwand (4) gesteuert wird.

12. Interaktionsverfahren nach Anspruch 10 oder 11, **dadurch gekennzeichnet, dass** während eines Startens und/oder Landens des Luftfahrzeuges (3) in einem ersten Schritt zumindest eine Durchströmöffnung (16) der Schalenwand (4) geöffnet ist, um durch das Luftfahrzeug (3) verursachte Fluidimpulse, insbesondere Luftströmungen (L), von einem von der Schalenwand (4) umfassten Innenbereich über die Durchströmöffnung (16) durch die Schalenwand (4) hindurch zu leiten und vorzugsweise anschließend in einem zweiten Schritt die zumindest eine Durchströmöffnung (16) geschlossen wird, um einen Fluidimpulsdruck, insbesondere Luftstau, unter dem Luftfahrzeug (3) zu erzeugen.

13. Interaktionsverfahren nach einem der Ansprüche 10 bis 12, **dadurch gekennzeichnet, dass** während eines Startens und/oder Landens des Luftfahrzeuges (3) mit einer Strömungserzeugungseinrichtung (18) ein Fluidimpuls, bevorzugt eine Luftströmung (L), erzeugt wird, welche das Luftfahrzeug (3) mit einer Kraft beaufschlagt.

14. Interaktionsverfahren nach einem der Ansprüche 10 bis 13, **dadurch gekennzeichnet, dass** während eines Startens und/oder Landens des Luftfahrzeuges (3) mit einer Gegenschalleinrichtung ein Gegenschallgeräusch erzeugt wird, um durch Interferenzbildung von Gegenschallgeräusch und eines vom Luftfahrzeug (3) emittierten Luftfahrzeuggeräusches das Luftfahrzeuggeräusch zu dämpfen.

15. Interaktionsverfahren nach einem der Ansprüche 10 bis 14, **dadurch gekennzeichnet, dass** die Landefläche (2) mit einem Katapult ausgefahren wird, um das Luftfahrzeug (3) mit der Landefläche (2) von der Landefläche (2) wegzustoßen.
